# EUROPEAN PATENT APPLICATION

(11) **EP 1 865 338 A2**
(43) Date of publication of application: **12.12.2007**
(21) Application number: 06015864.9
(22) Date of filing: 31.07.2006
(51) Int. Cl.: G01T 1/18, G01T 1/20, G01T 7/00

(54) **Personal radiation detector and method of operation of personal radiation detector**

(30) Priority: 15.03.2006 BY 20060421
(71) Applicant: Antanouski, Aliaksandr Alexeevich, Minsk, 220013 (BY)
(72) Inventor: Antanouski, Aliaksandr Alexeevich, Minsk, 220013 (BY)
(74) Representative: Schütte, Hartmut

(57) **Abstract**

The invention is related to ionizing radiation measuring devices, and it can be used for detection and identification of ionizing radiation indoor and outdoor

The aim of the present invention is multipurpose, small-sized, ergonomic device development, allowing to determine and measure ionizing radiation, and also to maintain and subsequently represent the obtained data for processing.

The set problem is solved by that the ionizing radiation detector is used as the sensing unit, connected with microcontroller by means of a converter, the device in addition contains nonvolatile memory for data arrangement and command set, and the interface for connection with computer.

The set problem is solved also by that the measurements are carried out constantly, records are made periodically by the user setting, and in case of value current or accumulated established criterion level excess the device gives alert signal and stores current value, not waiting for periodic write time, and at connection with a computer these data are automatically transferred in computer and processed for identification and saving.

There are also other differences from the prototype.

The invention positive result is inexpensive device development, available for any user, at that it is functional as it works in automatic mode and ensures, if necessary, the Internet-service that allows untrained user to gain the qualified knowledge.

## Description

The invention concern to ionizing radiation measuring devices, and can be used for detection and identification of ionizing radiation indoor and outdoor, as well as by technicians of radiological and radioactivity laboratories, emergency services, and also by experts of different industries, agriculture, transport, medicine, etc. where nuclear power technical installations and ionizing radiation sources are used, and also at terrorist threat detection. The device can be used in a system of radioactive materials identification by means of accumulated photon radiation scintillation spectra analysis. It is intended for detection and registration of ionizing radiation which influences on an individual, and also for detection of radiation contamination of environment and objects, including food.

Known is the portable medical data device [1]. The known solution allows to user accumulating and changing individual and medical information containing in the portable device. The device includes a storage element with the standard computer interface, preferably, USB port. The data is systematized that enables user entering the information on user's case history and data from storage element. Thc data is systematized, that allows the user entering an image for the further case history completion. The device allows the medical personnel to get access to the necessary information on the patient easily and in proper time. The storage element also contains the software necessary for data processing and visualization.

The deficiency of this known device is an impossibility of detecting any external radiation which may be hazard for individual health. In the device the user uploads the information from a computer, i.e., the device saves only the uploaded information in the form of medical cards.

Also known is the prototype of a device for global network of monitoring of possible personal threat and terrorist activity [2]. The device can be used for detection of chemical, radiological or biological threats by means of the modified personal wireless device with built-in a chemical, radiological or biological threat detector.

The wireless device includes functional telecommunication and sensitive modules, a sensor for pollutant detection, a device for two-side communication; overflow signal indicator, a microprocessor or a microcontroller for control and transmission of pollutant signal.

The prototype for invention is a method of global network of terrorist and personal threat tracing [2] which includes operation sequence of environmental contamination level detection, ionizing radiation level calculation and warning and transmission of these signals by mobile communication in case of ionizing radiation level excess.

The deficiency of the prototype is complexity and, therefore, expensiveness of the device. Moreover, this device cannot accumulate and store the obtained data for the subsequent analysis; it does not allow the usual user to process obtained data but only transmits it to remote data terminal.

The task being fulfilled by this invention is development of multipurpose, small-sized, ergonomic device, allowing to detect and measure ionizing radiation, and also to maintain and subsequently represent the obtained data for processing.

The task is fulfilled by that in the known device including the sensitive module, which comprises, at least, one sensitive sensor for pollutant detection in environment, control system with microcontroller for sensitive module operating, an alert device for warning in case the pollutant level exceeds preset threshold, power supply and control buttons, according to the invention, the ionizing radiation detector is used as the sensitive module connected with microcontroller by means of converter, in addition the device contains nonvolatile memory for data arrangement and command set, and the interface for connection with a computer.

The set problem is solved also by using a gas-discharge proportional counter as the ionizing radiation detector.

The set problem is solved also by that a GM counter is used as the ionizing radiation detector.

The set problem is solved also by that a semiconductor sensor is used as the ionizing radiation detector.

The set problem is solved also by that scintillation sensor is used as ionizing radiation detector.

The set problem is solved also by that USB interface is used as the computer interface.

The set problem is solved also by that PCMCA interface is used as the computer interface.

The set problem is solved also by that nonvolatile memory is split into memory that is available to a user for writing any computer files, and protected memory access to which can be realized only by means of commands written in device nonvolatile memory or in attached computer.

The set problem is solved also by that the protected nonvolatile memory is organized in the form of values array automatically measured by the device and supplied with sample time marks

The set problem is solved also by that the device includes additionally a module with GPS receiver, and the protected nonvolatile memory is organized in the form of values array automatically measured by the device and supplied with sample time and location reads out from GPS receiver.

The set problem is solved also by that it includes additionally the device of registration of energy distribution of measured radiation, and the protected nonvolatile memory is organized in the form of values array automatically measured by the device.

The set problem is solved also by that command set stored in the nonvolatile memory ensures automatic transmission to computer memory of values array automatically measured by the device and supplied with time and location reads out when the device is connected to computer.

The set problem is solved also by that the command set contains commands of user identification.

The set problem is solved also by that the command set is automatically updated during communication of the device with a computer.

The set problem is solved also by that in known personal radiation detector and method of its operation include the sequence operations: detection of environment contamination level, calculation of ionizing radiation level and the warning in case of ionizing radiation level excess, then, according to the invention, the measurements are carried out constantly, records are made periodically by the user setting, and in case of value current or accumulated established criterion level excess the device gives alert signal and stores current value, not waiting for periodic write time, and at installing connection with a computer these data are automatically transferred into a computer and processed for identification and saving.

The set problem is solved also by that measured an irradiation energy spectrum is additionally stored.

The set problem is solved also by that alarm signal is given in a form of light and/or sound, and/or vibration.

The set problem is solved also by that at device connection to computer the user identification is done, and computer data base can be updated from the nonvolatile memory into computer memory and command set updates are realized in the nonvolatile memory.

The invention is illustrated by figures.

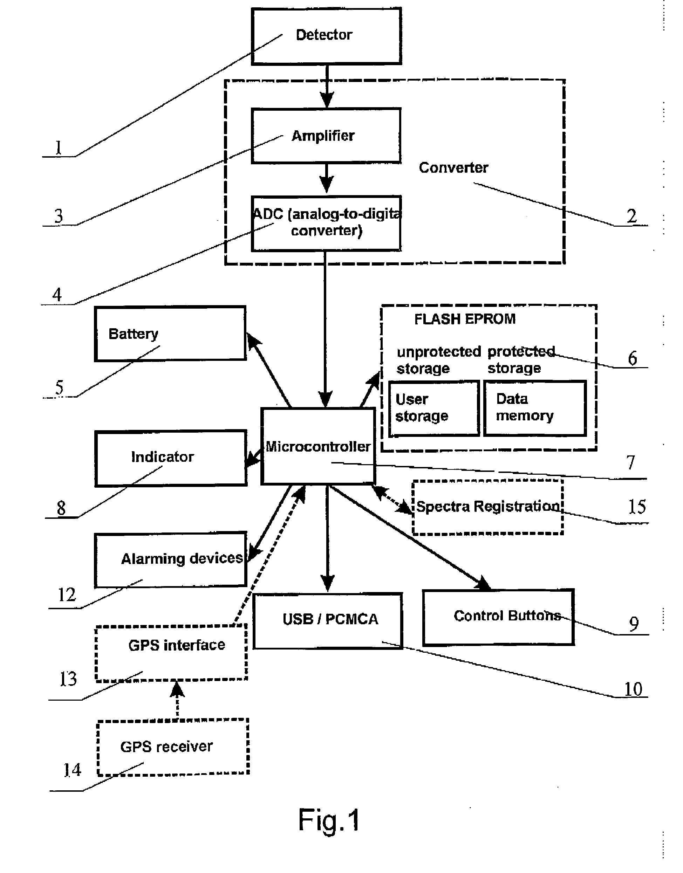

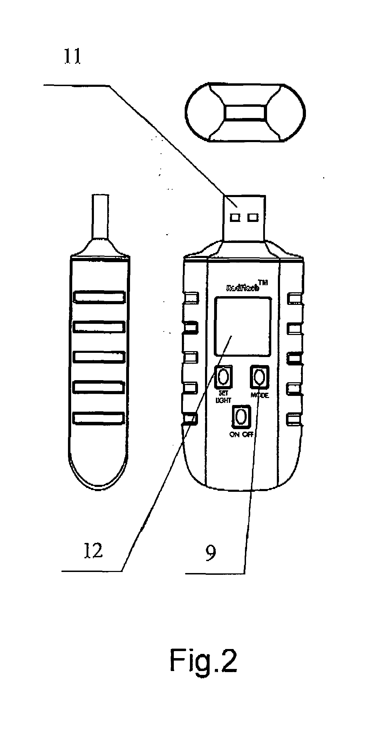

The block diagram of the personal wireless device is represented in Fig. 1.
The device general view is represented in Fig. 2.

The personal radiation detector comprises an ionizing radiation detector 1 as, for example, the scintillation detector, a converter 2 including amplifier 3 and ADC 4 analog/digital converter, power element 5, nonvolatile memory 6, microcontroller. 7, indicator 8, control buttons 9, the interface 10 realized, for example, in the form of USB slot 11 and alarming device 12. The device may additionally comprise a module 13 with the global satellite positioning system receiver 14. The device may additionally contain the module of registration of measured radiation energy distribution 15.

The device works in the following way. The transformation of gamma quanta in electrical impulses proportional to gamma quanta energies takes place in the detector 1. Impulses from detector 1 come in to converter 2 inlet, and after amplification to ADC 4.

The analog-to-digital converter 4 transforms an analog signal to digital one.

The data coining from analog-digital converter 4 are processed by microcontroller 7.

The device operation history, accumulated spectra, as well as series of service parameters and coefficients, including sampling times, coordinates of samplings place of if necessary and opportunities, identification user number are saved in device nonvolatile memory 6.

The special software for PC is saved in the nonvolatile memory 6 too. After device connection by USB or PCMCI interface 10 to computer, the program is installed in PC. By means of this software the information stored in device nonvolatile memory 6 is automatically read out in PC, and then it is processed. The program allows to analyze spectra that are read off device and to identify isotopes according to accumulated spectra. The program allows also to read out in real-time current outcomes from the device connected to PC and to make spectra accumulation and processing.

The nonvolatile memory 6 can be split in device usage in the form of removable computer disk and the protected area in which information on radiation is automatically recorded.

The power supply element 5 ensures device functioning in autonomous mode, for supply of ionizing radiation sensor, microcontroller 7 and measured data record in the nonvolatile memory 6.

At current or accumulated level excess of ionizing radiation, the indicator 8 gives one or several signals, - light, beep and/or vibration signals. Control buttons 9 are necessary to turn off the alarming signal and can be used execute other auxiliary functions specified by manufacturer.

The software stored in device nonvolatile memory 6 can be automatically updated at the time of connection to computer.

Identification of isotopes based on the accumulated spectra may be performed by means of the special service allocated in Internet web site in case of impossibility to carry out such identification locally at the user computer. The Internet-service allows updating the software and spectra bases for any user who has been connected to this service.

The invention is realized as experimental-industrial batch unit at "Polimaster" limited company enterprise, Minsk. Belarus. The documentation for mass production is prepared.

The invention positive result is creation inexpensive device, available for any user, at that it is functional as it has nonvolatile memory and can be used as removable computer disk along with ionizing radiation sensor. At that accumulated information on ionizing radiation to which the bearer of the data device was exposed will be processed automatically every time at connection to computer.

The sources of the information taken into consideration at expert examination
1. European application for patent WO05109336, G06F 17/60
2. USA application for patent 20040119591 A1, Publ. 24/06/2004 - the device and method prototype.

## Claims

1. A personal radiation detector comprising of the sensitive module, specified sensitive module has, at least, one sensitive sensor for pollutant detection in an environment, control system with m.icrocontroller for sensitive module operating, an alert device for warning of pollutant exceeding level detection, power supply and control buttons,
***characterized***
**in that** the ionizing radiation detector is used as the sensing sensor, connected with microcontroller by means of converter, the device in addition contains nonvolatile memory for data arrangement and command set, and the interface for connection with computer.

2. The personal radiation detector according to claim 1
*is* ***characterized***
**in that** gas-disch.arge analogical sensor is used as ionizing radiation detector.

3. The personal radiation detector of claim 1
*is* ***characterized***
**in that** GM counter is used as ionizing radiation detector.

4. The personal radiation detector of claim 1
*is* ***characterized***
**in that** semiconductor sensor is used as ionizing radiation detector.

5. The personal radiation detector of claim 1
*is* ***characterized***
**in that** scintillation sensor is used as ionizing radiation detector.

6. The personal radiation detector of claims 1 - 5
*is* ***characterized***
**in that** USB interface is used as the computer interface.

7. The personal radiation detector of claims 1-5
*is* ***characterized***
**in that** PCMCA interface is used as the computer interface.

8. The personal radiation detector of claims 1 - 7
*is* ***characterized***
**in that** nonvolatile memory is split into memory that is available to user for storing any computer files, and protected memory access to which can be realized only by means of command stored in device nonvolatile memory or in attached computer.

9. The personal radiation detector of claims 1 - 8
*is* ***characterized***
**in that** the protected nonvolatile memory is organized in the form of values array automatically measured by the device and supplied with sample - time marks.

10. The personal radiation detector of claims 9
*is* ***characterized***
**in that** the device includes additionally a module with GPS receiver, and the protected nonvolatile memory is organized in the form of values array automatically measured by the device and supplied with sample time and location checks read out from GPS receiver.

11. The personal radiation detector of claims 9 or 10
*is* ***characterized***
**in that** it includes additionally the device of energy distribution of measured radiation registration, and the protected nonvolatile memory is organized in the form of values array automatically measured by the device.

12. The personal radiation detector of claims 1-10
*is* ***characterized***
**in that** command set stored in the nonvolatile memory ensures automatic transmission to computer memory of values array automatically measured by the device and supplied with time and location checks at device connection to computer.

13. The personal radiation detector of claims 1-12
*is* ***characterized***
**in that** the command set contains commands of user identification.

14. The personal radiation detector of claims 1-1.3
*is* ***characterized***
**in that** the command set is automatically updated at communication with computer.

15. The method of operation of the personal radiation detector including the sequence operations: detection of environment contamination level, calculation of ionizing radiation level and the warning, in case of ionizing radiation level excess
is ***characterized***
**in that**, the measurements are carried on constantly, records are made periodically by the user setting, and in case of value current or accumulated established criterion level excess, the device gives alert signal and stores current value, not waiting for periodic write time, and at installing connection with a computer, these data are automatically transferred in computer and processed for identification and saving.

16. The method of operation of the personal radiation detector of claim 15
*is* ***characterized***
**in that** measured irradiation energy spectrum is additionally stored.

17. The method of operation of the personal radiation detector of claims X 5 - 16
*is* ***characterized***
**in that** alarm signal is given in a form of light and/or sound, and/or vibration.

18. The method of operation of the personal radiation detector of claims 15-17
*is* ***characterized***
**in that** at device connection to computer the user identification is done, and computer data base can be updated from the nonvolatile memory into computer memory and command set updates arc realized in the nonvolatile memory.
